(19) **Europäisches Patentamt / European Patent Office / Office européen des brevets**

(11) **EP 3 480 172 B1**

(12) **EUROPEAN PATENT SPECIFICATION**

(45) Date of publication and mention of the grant of the patent:
**19.08.2020 Bulletin 2020/34**

(51) Int Cl.:
**_C03B 33/06_** [(2006.01)]

(21) Application number: **18202506.4**

(22) Date of filing: **25.10.2018**

(54) **METHOD FOR SEPARATING A ROD-LIKE OR TUBULAR OBJECT MADE OF A BRITTLE MATERIAL**

VERFAHREN ZUM TRENNEN EINES STABFÖRMIGEN ODER ROHRFÖRMIGEN OBJEKTS AUS EINEM SPRÖDEN MATERIAL

PROCÉDÉ DE SÉPARATION D'UN OBJET TUBULAIRE OU EN FORME DE TIGE CONSTITUÉ D'UN MATÉRIAU FRAGILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2017 CZ 20170699**

(43) Date of publication of application:
**08.05.2019 Bulletin 2019/19**

(73) Proprietor: **VÚTS, a.s.**
**Liberec XI - Ruzodol I**
**460 01 Liberec (CZ)**

(72) Inventors:
• **Pustka, Martin**
  **460 06 Liberec (CZ)**
• **Sidlof, Pavel**
  **460 14 Liberec (CZ)**
• **Erhart, Jiri**
  **460 14 Liberec (CZ)**

(74) Representative: **Musil, Dobroslav**
**Zabrdovicka 801/11**
**615 00 Brno (CZ)**

(56) References cited:
**EP-A2- 0 341 942**

• **Ernstson Kord: "Meteorite impact spallation: from mega- to micro-scale - ERNSTSON CLAUDIN IMPACT STRUCTURES - METEORITE CRATERSERNSTSON CLAUDIN IMPACT STRUCTURES - METEORITE CRATERS", Faculty of Philosophy I, University of Würzburg, Germany , 2014, XP055571373, Retrieved from the Internet: URL:http://www.impact-structures.com/impact-educational/meteorite-impact-spallation-from-mega-to-micro-scale/ [retrieved on 2019-03-19]**

## Description

## Technical field

A method for separating a rod-like or tubular object made of a brittle material, particularly glass, in which at first at least one circumferential notch is made on the surface of the object, and then the fixed object is acted on by an impulse of force with a selected amplitude and waveform.

## Background art

The fact that large-series production of glass objects (beads, chatons) from tubes or rods, especially glass tubes or rods of small diameters, is very laborious is greatly influenced by the requirement for the quality of their face surfaces. Currently cutting is performed, for example, by chopping or breaking. The drawback is the poor quality of the cutting surface.

Document US 2436819 from 1944, which relates to the production of glass beads, describes a bundle of long glass tubes arranged parallel to one another and are placed closely together. The air spaces between the tube surfaces are filled up with a water-soluble material which, when solidified, forms a solid body with the tubes. It is then cut with a narrow abrasive disc into circular plates which are washed in water. This causes the solidified material to dissolve and the free beads are dried. The disadvantage is the relatively difficult operation of creating a rigid bundle of glass tubes and washing off the particles of adhesive material to clean the individual glass bodies. Moreover, this operation is difficult to automate. Furthermore, the diameter of the tube bundle requires a rigid disc, which is reflected in the cutting thickness and hence in the great thickness of the cut. The cutting surface of the tube will probably not be smooth enough without performing a further finishing operation.

Document DE102005054669A1 primarily deals with the cutting of glass panes. In the pane, a straight groove is cut by a cutting wheel, needle, or laser at the point where the pane is to be divided. An ultrasonic oscillator is brought into contact with the glass near the groove and is guided at a frequency of 20 to 30 kHz on the glass along the groove, thereby separating the glass at the groove. An alternative method is disclosed here, namely a method of dividing a glass tube in whose surface the groove has been made previously. The contact surface of the ultrasonic oscillator is then guided around the circumference of the tube at the groove. However, this method is technically and economically unusable for dividing small diameter tubes, for example, in the production of glass beads.

XP05571373 discloses a process of spallation in a tubular solid material. The impulsive force arranged in the longitudinal axis of the tubular member creates a compressive pulse which is reflected at the free surface of the tube as a tensile pulse. This tensile pulse exceeds the tensile strength of the material of the tube leading to the separation of the end portion of the tube.

The aim of the invention is therefore to eliminate the drawbacks of the background art and propose a solution which would be economical especially for small diameters of glass tubes and which would result in a high quality of the dividing surface of the final separated elements without further laborious operations.

## Principle of the invention

The aim of the invention is achieved by a method for separating a rod-like or tubular object made of a brittle material, on which a circumferential notch is made in a predetermined position, whereupon the fixed object is acted on by a force impulse having a chosen amplitude and waveform, whose principle consists in that the force impulse is applied in the direction of the longitudinal axis of the object to be separated to produce a longitudinal compression stress wave propagating through the object in the direction of its longitudinal axis, the longitudinal wave being reflected from the free end of the separated object in the form of a tensile wave (TA) which in the region weakened by the circumferential notch (11) closest to the free end of the object causes separation of the end portion of the tube, hereinafter called a preform. The pressure tension impulse passes through the circumferential notch with no effect, whereupon the return tensile wave, which is added to the advancing compression wave, causes a tension higher than the strength of the separated object in the notch region.

## Description of drawings

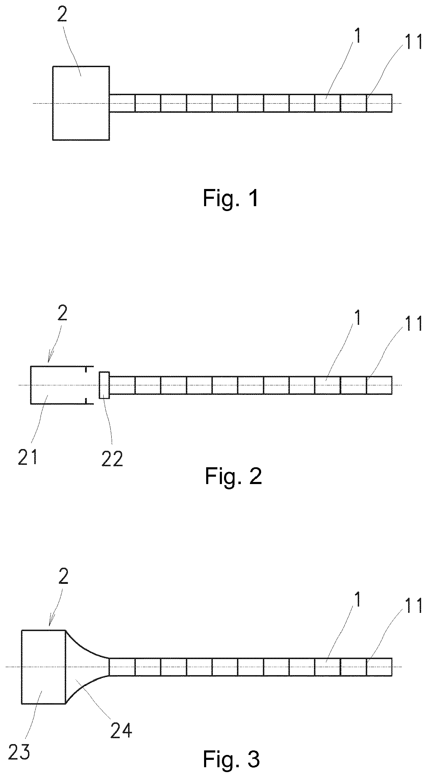

A part of the device for separating a glass tube, particularly a small diameter tube by a method according to the invention is schematically illustrated in Figs. 1 to 3; Figs. 4a to 4c show a schematic diagram of the process of the tube division.

## Examples of embodiment

A device for separating a glass tube or a rod by a method according to the invention (hereinafter, for the sake of simplicity, only the term "tube" is used) consists of two basic parts. The first known part of the device which is not a subject-matter of the invention is not shown. It comprises a cutting means for breaking the surface of the tube by making at least one circumferential notch in the outer surface of the tube. This is carried out by any of the known cutting tools, such as a cutting wheel, needle, laser, and the like. It is important for the notches to be spaced at predetermined mutual distances and to have a suitable shape, so that they will create appropriate weakening of the cross section of the tube wall. The notches may also have different depths depending on the distance from the impulse device, thereby respecting the change in the impulsive force according to that distance. The circumferential notch is a region with significantly lower strength than the uninterrupted part of the tube, therefore the breaking off and separation of the tube portion is performed in a controlled manner in the notched region.

The second part of the device, shown in Fig. 1, comprises an active means for breaking off a portion or portions of the tube **1** which is the source **2** of impulsive force.

In the first exemplary embodiment shown in Fig. 2, the source **2** of impulsive force is an unillustrated device **21** for accelerating a metal projectile **22** to the required velocity towards the face of the divided tube **1** in its longitudinal axis and to the impact on the face. The power part of the device **21** utilizes compressed air, centrifugal force, or magnetic force to accelerate the projectile **22.**

In the second exemplary embodiment shown in Fig. 3, the source **2** of impulsive force is an ultrasonic oscillator **23** comprising a piezoelectric element, which is adjoined by a tapering steel extension constituting a concentrator **24** concentrating the generated impulsive force into the face of the tube **1,** which is in direct area contact with the face of the concentrator **24** facing away from the ultrasonic oscillator **23.**

In the exemplary embodiments, the tube 1 is mounted in a hinge (not shown) in the axis of the source **2** of impulsive force with freedom in the direction of this axis. This allows free propagation of the force impulse in the axial direction of the tube **1.** The impulse transmission to the tube **1** is important, therefore, in the case of a shock excitation, a very good contact must be ensured between the projectile **22** or the face of the concentrator **24** and the face of the tube **1,** preferably over the entire cross-section of the tube **1.**

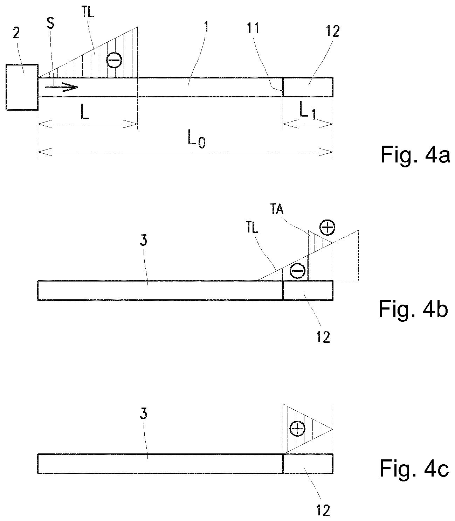

The principle of division is illustrated in Figs. 4a to 4c. In the exemplary embodiment, the tube **1** having a length $L_0$ is provided with one circumferential notch **11** which is made at a distance $L_1$ from the free end of the tube **1.** The segment of the tube to be broken off is hereinafter referred to as the "preform" **12.** The source **2** of impulsive force is connected to the opposite end of the tube **1** in the longitudinal axis of the tube **1.**

After inducing mechanical impact, a longitudinal compression elastic wave **TL** (Fig. 4a) propagates in the direction **S** in the tube **1,** which has a triangle course for simplification. Its length **L** is smaller than twice the length $L_1$ of the desired preform **12.** The compressive stress pulse passes through the plane of the notch **11** with no effect and at the free end of the tube **1** is gradually reflected back with the opposite sign as the tensile wave **TA** which is added to the advancing compression wave (Fig. 4b). For the calculation of the wave propagation and reflection, for example, a generally available theory of stress wave propagation of and impact propagation in thin rods can be used.

When the tensile wave front in the illustrated example reaches the dividing plane in the notch **11** region, the end preform **12** of the tube **1** is separated because the material of the dividing plane does not transmit the tension of the returning tensile wave **TA** (Figure 4c). Thus, if the stress pulse has an adequate amplitude and a suitable course, the respective preform **12** is separated.

The basic parameters of the separation method according to the invention can be derived from the mechanical properties of the glass of which the tube **1** is made. In this example, Young's modulus of elasticity of ordinary glass **E** = 60 GPa, density $\rho$ = 2500 kg.m$^{-3}$ and corresponding velocity c = 4900 ms$^{-1}$ of the propagation of longitudinal waves can be applied.

The theoretical length of the stress pulse T can be determined from the expression

$$T = \frac{2L_1}{c}$$

For the considered length L1 = 3.6 mm of the preform **12,** the corresponding length of the pressure stress pulse is approximately T = 1.5 $\mu$s.

In the second exemplary embodiment shown in Fig. 3, wherein the source **2** of impulsive force is an ultrasonic oscillator **23,** the ultrasonic oscillator can send several approximately sinusoidal waves at a suitably chosen frequency so that the compression half-wave, which is reflected as a tensile wave, is added to the advancing tension half-wave. Thus, a double tension amplitude is obtained. Thereafter, half the power of the ultrasonic oscillator **23** is sufficient to separate the preform **12.** With a suitably selected number of waves (two or three), the maximum tensile stress is formed in the region of the last notch before the end of the rod and only one preform **12** is separated. Then the cycle can be repeated.

## List of references

| | |
|---|---|
| 1 | glass tube |
| 11 | circumferential notch |
| 12 | preform |
| 2 | impulsive force source |
| 21 | device for accelerating a metal projectile |
| 22 | metal projectile |
| 23 | ultrasonic oscillator |
| 24 | concentrator |
| L | length of the tensile pulse |
| $L_0$ | initial length of the tube |
| $L_1$ | length of the preform |
| TL | compression wave |
| TA | tensile wave |

## Claims

**1.** A method for separating a rod-like or tubular object made of a brittle material, especially glass, in which at first at least one circumferential notch (11) is made on the surface of the object at a predetermined point, whereupon impulsive force of a chosen amplitude and waveform is applied to the fixed object, **characterized in that** the force pulse is applied in the direction of the longitudinal axis of the object to be separated to produce a longitudinal stress wave propagating through the object in the direction of its longitudinal axis, the stress wave being reflected from the free end of the separated object in the form of a tensile wave (TA) which in the region weakened by the circumferential notch (11) closest to the free end of the object causes separation of the end preform (12), wherein the length (L) of the of the stress wave is smaller than twice the length (L1) of the desired perform (12).

## Patentansprüche

1. Verfahren zur Teilung eines stab- oder rohrförmigen Gegenstandes, der aus einem zerbrechlichen Material, insbesondere aus Glas, gebildet ist, bei dem auf der Oberfläche des Gegenstandes zuerst in einer bestimmten Stelle mindestens eine Umfangsritze (11) gebildet wird, wonach auf den zu teilenden Gegenstand mit einem Kraftimpuls mit einer gewählten Amplitude und einem zeitlichen Verlauf gewirkt wird, **dadurch gekennzeichnet, dass** mit dem Kraftimpuls in der Richtung einer Längsachse des zu teilenden Gegenstandes gewirkt wird, wodurch eine Längsspannungswelle entsteht, die sich durch den Gegenstand in der Richtung seiner Längsachse ausbreitet, die sich vom freien Ende des zu teilenden Gegenstandes als eine Zugwelle (TA) zurückprallt, die in der durch eine Umfangsritze (11) abgeschwächten Stelle, die dem freien Ende des Gegenstandes am nächsten ist, eine Trennung der Endpräform (12) verursacht, wobei die Länge (L) der Spannungswelle niedriger als das Doppelte der Länge ($L_1$) der erforderlichen Präform (12) ist.

## Revendications

1. Procédé de division d'un objet en forme de barre ou tuyau fabriqué avec de la matière fragile, en particulier en verre, lors duquel se forme d'abord à la surface de l'objet, à un point précis, au moins une encoche circonférentielle (11); sur l'objet divisé est ensuite exercée une impulsion de force de l'amplitude et du cours du temps choisis, **caractérisé en ce que** l'impulsion de force est exercée dans le sens de l'axe longitudinal de l'objet divisé, ce qui crée une onde de tension longitudinale propagée dans l'objet dans le sens de son axe longitudinal qui est reflété par l'extrémité libre de l'objet divisé en tant que l'onde (TA) de traction, causant à l'endroit affaibli par l'encoche circonférentielle (11), au plus près de l'extrémité libre de l'objet, le détachement de la préforme (12), alors que la longueur (L) de l'onde de tension est plus petite que le double de la longueur ($L_1$) de la préforme souhaitée (12).

Fig. 1

Fig. 2

Fig. 3

Fig. 4a

Fig. 4b

Fig. 4c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2436819 A
- DE 102005054669 A1